# NEW EUROPEAN PATENT SPECIFICATION

(11) **EP 2 634 022 B2**
(45) Date of publication and mention of the opposition decision: **30.08.2023**
(45) Mention of the grant of the patent: 13.12.2017
(21) Application number: 13157354.5
(22) Date of filing: 01.03.2013
(51) Int. Cl.: B60H 1/00, B60H 1/24

(54) **Air conditioning system for motor vehicles**
Klimaanlagensystem für Motorfahrzeuge
Système de climatisation pour véhicules à moteur

(30) Priority: 02.03.2012 KR 20120021687; 19.02.2013 KR 20130017280
(43) Date of publication of application: 04.09.2013
(73) Proprietor: Hanon Systems, Daejeon 34325 (KR)
(72) Inventor: Kim, Doo Hoon, 306-230 Daejeon (KR); Han, Joong Man, 306-230 Daejeon (KR); Lee, Jun Kang, Daejeon 306-230 (KR); Park, Sang Kyu, 306-230 Daejeon (KR); Han, Young Hum, 306-230 Daejeon (KR); Nam, Soo Byeong, 306-230 Daejeon (KR)
(74) Representative: SSM Sandmair

(56) References cited:
- JP-A- 2005 138 735
- JP-A- 2009 143 330
- KR-A- 20050 111 251
- KR-A- 20080 102 732
- US-A- 4 452 301
- US-A- 5 109 755
- US-B2- 7 775 152

## Description

### Field of the Invention

The present invention relates to an air conditioning system for motor vehicles and, more particularly, to an air conditioning system for motor vehicles in which a warm air flowing through a warm air path is bypassed toward a defrost vent such that a cold air flowing through a cold air path can be partially admitted into a vehicle room during the process of increasing the temperature of the upper region of the vehicle room, thereby preventing a phenomenon that the temperature of the upper region of the vehicle room grows too high and a phenomenon that the vehicle room environment becomes unpleasant.

### Background of the Invention

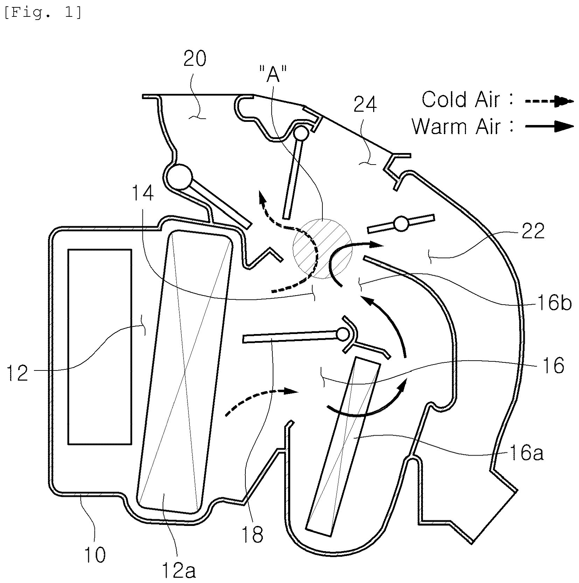

A motor vehicle is provided with an air conditioning system for cooling or warming a vehicle room. As shown in Fig. 1, an air conditioning system includes an air conditioner case 10 within which a main flow path 12 is formed. An indoor air or an outdoor air fed from a blower (not shown) flows through the main flow path 12. An evaporator 12a is installed within the main flow path 12. The evaporator 12a serves to cool the air flowing along the main flow path 12.

The main flow path 12 is bifurcated into a cold air path 14 and a warm air path 16. A heater core 16a is installed within the warm air path 16. A temperature control door 18 is arranged at a bifurcating point of the cold air path 14 and the warm air path 16. The cold air cooled by the evaporator 12a passes through the cold air path 14. The warm air heated by the heater core 16a passes through the warm air path 16.

The temperature control door 18 is swung between the cold air path 14 and the warm air path 16 to adjust the opening degree of the cold air path 14 or the warm air path 16, thereby controlling the amount of the cold air or the warm air supplied into the vehicle room.

The warm air path 16 is configured such that the downstream end portion 16b thereof can be merged with the cold air path 14. Thus, the warm air flowing along the warm air path 16 and the cold air flowing along the cold air path 14 are combined together and are mixed with each other. The mixed air is supplied into the vehicle room through individual vents 20, 22 and 24 while maintaining an appropriate temperature. In the following description, the merging point of the warm air path 16 and the cold air path 14 will be referred to as air mixing area A.

The conventional air conditioning system referred to above has a drawback in that the mixing efficiency of the cold air and the warm air in the air mixing area A becomes lower due to the difference in wind velocity and air density between the cold air flowing through the cold air path 14 and the warm air flowing through the warm air path 16. For that reason, the cold air and the warm air admitted into the air mixing area A are not mixed with each other. This poses a problem in that the cold air and the warm air flow in an unmixed laminar state.

In particular, the cold air and the warm air differing in velocity and density from each other are collided with and pushed against each other when they are admitted into the air mixing area A. In this process, the cold air coming from the cold air path 14 is lopsided toward a defrost vent 20 existing near the cold air path 14. The warm air coming from the warm air path 16 is lopsided toward a floor vent 22 existing near the warm air path 16.

This poses a problem in that a large amount of cold air is introduced into the defrost vent 20 existing near the vehicle window and a large amount of warm air is admitted into the floor vent 22 existing near the vehicle floor. Thus, there is a disadvantage that a large amount of cold air is supplied to the upper region of the vehicle room and a large amount of warm air is fed to the lower region of the vehicle room.

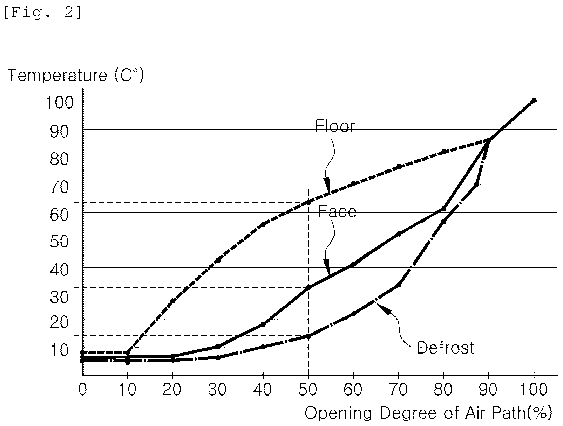

Therefore, as shown in Fig. 2, the upper region of the vehicle room is kept at a low temperature and the lower region of the vehicle room is kept at a high temperature. As a result, a temperature deviation is generated between the upper and lower regions of the vehicle room, thereby significantly reducing the pleasantness in the vehicle room.

Many different technologies have heretofore been developed in an effort to solve the problem of temperature deviation generated within the vehicle room. As one example, KR2005-111251A discloses an air conditioning system for motor vehicles.

Referring to Fig. 3, the air conditioning system disclosed in KR2005-111251A includes a bypass path 20a extending from the downstream end portion 16b of the warm air path 16 toward the defrost vent 20. In this air conditioning system, the warm air flowing through the warm air path 16 is partially bypassed into the bypass path 20a and then directly supplied to the defrost vent 20.

This enables the warm air to be directly admitted into the defrost vent 20. It is therefore possible to supply a sufficient amount of warm air to the upper region of the vehicle room, thereby increasing the temperature in the upper region of the vehicle room. This helps reduce the temperature deviation between the upper and lower regions of the vehicle room.

The conventional air conditioning system cited above has a structure in which the warm air flowing through the warm air path 16 is directly bypassed toward the defrost vent 20. For that reason, the warm air of high temperature passing through the heater core 16a is directly introduced into the defrost vent 20 without going through the air mixing area A. This poses a problem in that the warm air of high temperature is excessively supplied to the upper region of the vehicle room.

Accordingly, there is a drawback that the temperature is unduly increased in the upper region of the vehicle room. In particular, the temperature in the upper region of the vehicle room becomes higher than the temperature in the lower region of the vehicle room. For that reason, instead of the temperature deviation between the upper and lower regions of the vehicle room becoming lower, the temperature distributions are reversed in the upper and lower regions of the vehicle room. This leads to a problem in that the pleasantness in the vehicle room gets even worse.

The document US-A 5,109,755 relates to a heating and ventilating apparatus for the cabin or passenger compartment of an automotive vehicle according to the preamble of claim 1 which includes a cold air transmission branch and an air heating branch, communicating with each other through a mixing zone and leading respectively to a de-icing port for the windshield of the vehicle, aerators or cabin vents at the level of the fascia panel, and lower outlet ports in the lower part of the cabin. A direct guide duct is arranged with its inlet penetrating partly into the outlet of the air heating branch, and with its outlet opening in the vicinity of the de-icing port, which allows warm air coming from the air heating branch to be mixed with the premixed air coming from the mixing zone.

### Summary of the Invention

In view of the above-noted problems, it is an object of the present invention to provide an air conditioning system for motor vehicles capable of preventing a warm air of high temperature from being excessively bypassed toward a defrost vent.

Another object of the present invention is to provide an air conditioning system for motor vehicles capable of preventing a warm air of high temperature from being excessively supplied to an upper region of a vehicle room.

A further object of the present invention is to provide an air conditioning system for motor vehicles capable of preventing an excessive temperature rise in an upper region of a vehicle room.

A still further object of the present invention is to provide an air conditioning system for motor vehicles capable of enhancing pleasantness in a vehicle room.

There is provided an air conditioning system for motor vehicles, including the features of claim 1.

With the air conditioning system according to the present invention, a part of the cold air flowing through the cold air path is introduced into the defrost vent when the warm air flowing through the warm air path is bypassed toward the defrost vent. Unlike the conventional air conditioning system in which only the warm air is bypassed toward the defrost vent, the air conditioning system of the present invention can provide an effect of preventing the warm air of unduly high temperature from being bypassed to the defrost vent. This makes it possible to prevent the warm air of unduly high temperature from being supplied to the upper region of the vehicle room. Accordingly, it is possible to prevent a phenomenon that the temperature of the upper region of the vehicle room grows too high and a phenomenon that the vehicle room environment becomes unpleasant.

### Brief Description of the Drawings

The above and other objects and features will become apparent from the following description of preferred embodiments, given in conjunction with the accompanying drawings.
Fig. 1 is a side section view showing one conventional air conditioning system for motor vehicles.
Fig. 2 is a graph illustrating a temperature difference between individual vents depending on the opening degree of a temperature control door when the conventional air conditioning system is in operation.

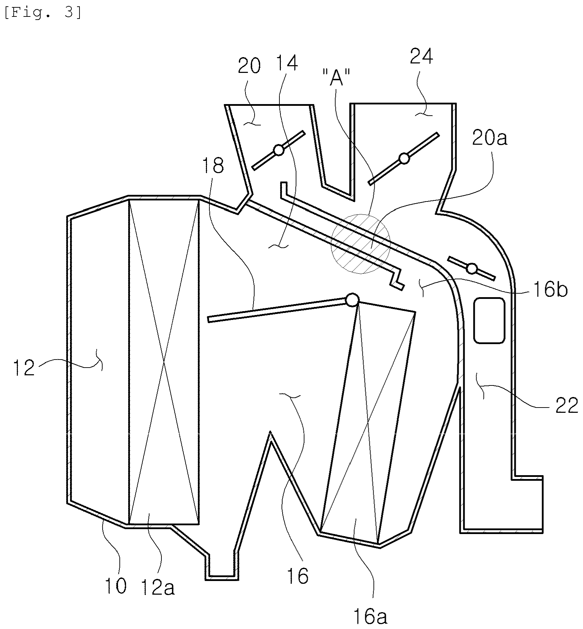

Fig. 3 is a side section view showing another conventional air conditioning system for motor vehicles.
Fig. 4 is a side section view showing an air conditioning system for motor vehicles according to a first embodiment, which does not show all the features of the invention.
Fig. 5 is a section view taken along line V-V in Fig. 4.
Fig. 6 is a graph illustrating a temperature difference between individual vents depending on the opening degree of a temperature control door when the air conditioning system of the first embodiment is in operation.
Fig. 7 is a view on one exemplary operation of the air conditioning system of the first embodiment, showing the operation of a cold air guide baffle in a cooling mode.
Fig. 8 is a view on another exemplary operation of the air conditioning system of the first embodiment, showing the operation of the cold air guide baffle in a heating mode.
Fig. 9 is a side section view showing an air conditioning system for motor vehicles according to a second embodiment of the present invention.
Fig. 10 is a view on one exemplary operation of the air conditioning system of the second embodiment, showing the operation of a cold air guide baffle in a cooling mode.

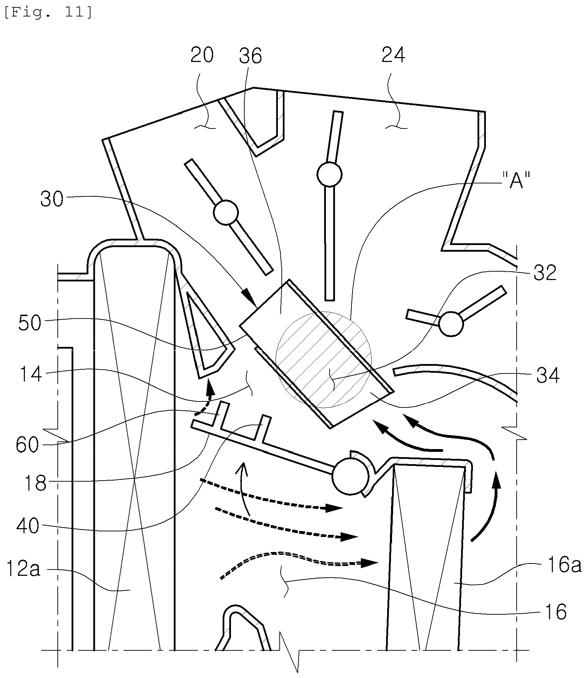

Fig. 11 is a view on another exemplary operation of the air conditioning system of the second embodiment, showing the operation of the cold air guide baffle in a heating mode.
Fig. 12 is a side section view showing an air conditioning system for motor vehicles according to a third embodiment of the present invention.

### Detailed Description of the Preferred Embodiments

Embodiments of an air conditioning system for motor vehicles will now be described in detail with reference to the accompanying drawings. The same reference symbols as used in describing the prior art will be used to designate the same elements.

### [First Embodiment]

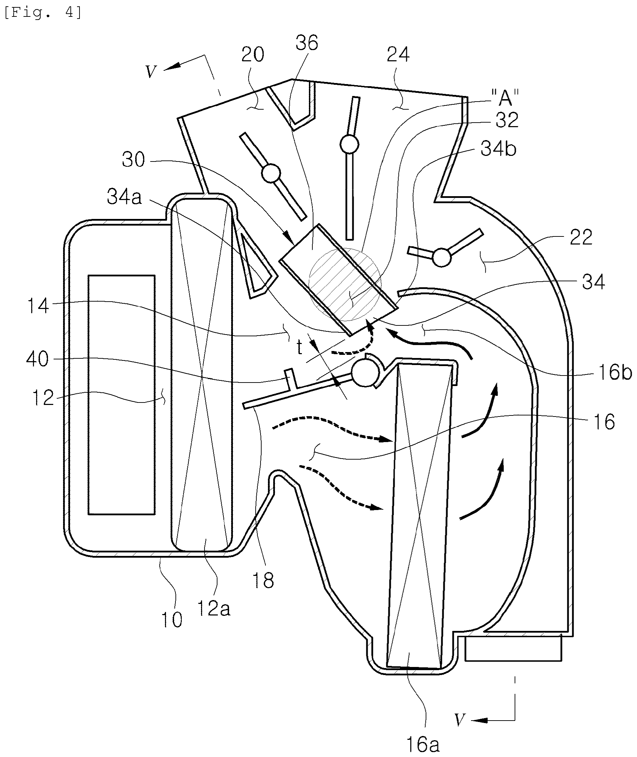

Prior to describing the features of an air conditioning system for motor vehicles according to the present invention, the general configuration of the air conditioning system will be briefly described with reference to Fig. 4.

The present air conditioning system includes an air conditioner case 10 within which a main flow path 12 is formed. An evaporator 12a is installed within the main flow path 12. The evaporator 12a serves to cool the air flowing along the main flow path 12.

The main flow path 12 is bifurcated into a cold air path 14 and a warm air path 16. A heater core 16a is installed within the warm air path 16. A temperature control door 18 is arranged at a bifurcating point of the cold air path 14 and the warm air path 16. The cold air cooled by the evaporator 12a passes through the cold air path 14. The warm air heated by the heater core 16a passes through the warm air path 16.

The temperature control door 18 is swung between the cold air path 14 and the warm air path 16 to adjust the opening degree of the cold air path 14 or the warm air path 16, thereby controlling the amount of the cold air or the warm air supplied into the vehicle room.

The warm air path 16 is configured such that the downstream end portion 16b thereof can be merged with the cold air path 14. The cold air path 14 is merged with the warm air path 16 in an air mixing area A where the warm air flowing through the warm air path 16 and the cold air flowing through the cold air path 14 are mixed with each other. The mixed air is supplied into a vehicle room via individual vents 20, 22 and 24 while maintaining an appropriate temperature.

Next, certain features of the air conditioning system will be described with reference to Figs. 4 through 7.

Referring first to Fig. 4, the present air conditioning system includes a bypass duct 30 installed to extend from a downstream end portion 16b of the warm air path 16 toward a defrost vent 20 across the air mixing area A.

The bypass duct 30 includes a bypass path 32 defined therein. The bypass path 32 is provided with an inlet 34 and an outlet 36. The inlet 34 is aligned with the downstream end portion 16b of the warm air path 16 to introduce a part of the warm air discharged from the warm air path 16. The outlet 36 is aligned with the defrost vent 20 to discharge the warm air toward the defrost vent 20.

With this bypass duct 30, the warm air introduced from the warm air path 16 into the bypass duct 30 is directly discharged toward the defrost vent 20. Thus, the warm air flowing through the warm air path 16 can be directly bypassed toward the defrost vent 20 without going through the air mixing area A.

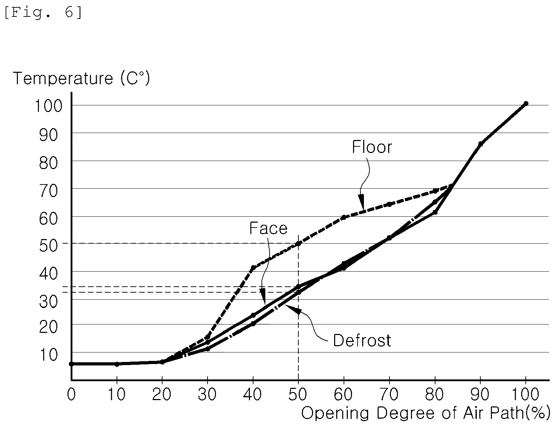

This enables a sufficient amount of warm air to be supplied to the upper region of the vehicle room. Therefore, as shown in Fig. 6, the temperature in the upper region (defrost region) of the vehicle room becomes higher. As a result, it is possible to reduce the temperature deviation between the upper region (defrost region) and the lower region (floor region) of the vehicle room, thereby enhancing the pleasantness within the vehicle room.

The bypass duct 30 is arranged in an internal flow path of an air conditioner case 10. Preferably, the bypass duct 30 is installed at the center of the internal flow path in the transverse direction of the internal flow path.

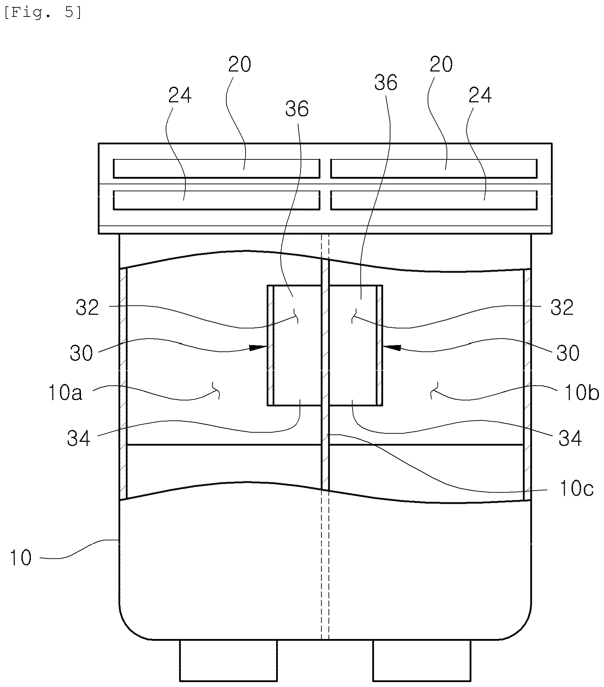

In case of a dual type air conditioning system capable of cooling and heating the left and right regions of the vehicle room independently of each other, as shown in Fig. 5, it is preferred that two bypass ducts 30 are respectively installed in a left flow path 10a and a right flow path 10b of an air conditioner case 10. Preferably, the bypass ducts 30 are attached to a central separator 10c partitioning the left flow path 10a and the right flow path 10b. More preferably, the bypass ducts 30 are symmetrically attached to the central separator 10c.

Referring back to Fig. 4, the inlet 34 of the bypass duct 30 is spaced apart from the downstream end portion 16b of the warm air path 16. Preferably, the inlet 34 of the bypass duct 30 has an upstream end opening spaced apart from the downstream end portion 16b of the warm air path 16 with a gap t left between the upstream end opening and the downstream end portion 16b such that the upstream end opening of the inlet 24 of the bypass duct 30 communicates directly with the cold air path 14. In the present embodiment, the upstream end opening of the inlet 34 serves as a cold air introducing means.

The reason for forming the bypass duct 30 in this manner is to ensure that a part of cold air flowing through the cold air path 14 is admitted into the inlet 34 of the bypass duct 30 through the upstream end opening. The cold air introduced from the cold air path 14 into the inlet 34 of the bypass duct 30 is mixed with the warm air introduced from the warm air path 16 into the inlet 34 of the bypass duct 30, thereby slightly reducing the temperature of the warm air flowing through the bypass duct 30.

The reason for mixing a part of the cold air with the warm air is to reduce the temperature of the warm air bypassed toward the defrost vent 20. This makes it possible to prevent a warm air of unduly high temperature from being supplied to the upper region of the vehicle room. Accordingly, it is possible to solve the problem inherent in the prior art, which is posed due to the supply of a warm air of unduly high temperature to the upper region of the vehicle room. More specifically, it is possible to prevent a phenomenon that the temperature of the upper region of the vehicle room grows too high and a phenomenon that the vehicle room environment becomes unpleasant.

The inlet 34 of the bypass duct 30 is formed into such a structure that the cold air flowing through the cold air path 14 can be easily introduced into the bypass duct 30 through the upstream end opening.

For example, the upstream end opening of the inlet 34 of the bypass duct 30 is inclined at a specified angle so as to face toward the cold air path 14. This enables the cold air flowing through the cold air path 14 to be readily introduced into the inlet 34 of the bypass duct 30 through the upstream end opening.

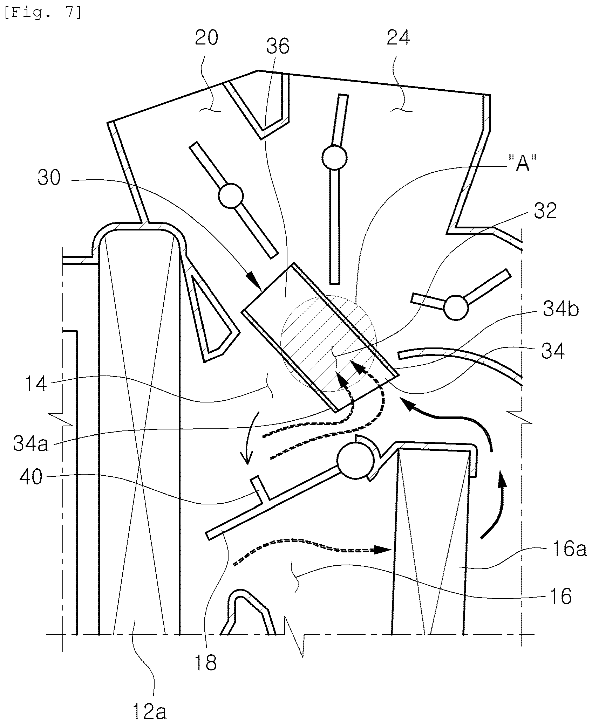

As another example, an edge portion 34b of the inlet 34 of the bypass duct 30 existing farther from the cold air path 14 may be formed longer than an edge portion 34a of the inlet 34 of the bypass duct 30 existing near the cold air path 14. In this case, the cold air coming from the cold air path 14 impinges against the edge portion 34b of the inlet 34 and flows into the inlet 34 of the bypass duct 30 (see Fig. 7). This makes it possible to efficiently introduce the cold air into the inlet 34 of the bypass duct 30 through the upstream end opening.

Referring again to Fig. 4, the air conditioning system further includes a cold air guide baffle 40 arranged on the temperature control door 18. The cold air guide baffle 40 is installed on one surface of the temperature control door 18 in an opposing relationship with the bypass duct 30, particularly in an opposing relationship with the inlet 34 of the bypass duct 30. In the present embodiment, the cold air guide baffle 40 serves as a cold air introduction amount control means.

When the temperature control door 18 is swung, the cold air guide baffle 40 is moved with respect to the inlet 34 of the bypass duct 30. The cold air guide baffle 40 controls the flow of the cold air introduced from the cold air path 14 into the inlet 34 of the bypass duct 30.

More specifically, as shown in Fig. 7, if the temperature control door 18 is swung in such a direction as to open the cold air path 14 in a cooling mode, the cold air guide baffle 40 allows the cold air to flow from the cold air path 14 toward the inlet 34 of the bypass duct 30, thereby increasing the amount of cold air introduced into the bypass duct 30. This enables an increased amount of cold air to be introduced into the bypass duct 30. As a result, it becomes possible to reduce the temperature of the air bypassed toward the defrost vent 20. This makes it possible to reduce the temperature of the air supplied to the upper region of the vehicle room in the cooling mode, consequently increasing the vehicle room cooling effect.

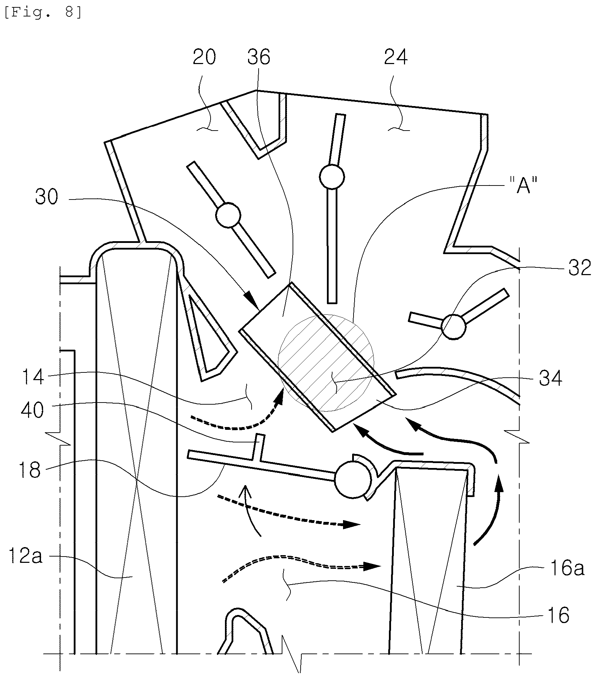

On the contrary, as shown in Fig. 8, if the temperature control door 18 is swung in such a direction as to open the warm air path 16 in a heating mode, the cold air guide baffle 40 restrains the cold air from flowing from the cold air path 14 toward the inlet 34 of the bypass duct 30. This makes it possible to reduce the amount of the cold air introduced into the bypass duct 30.

Thus, only a small amount of cold air is introduced into the bypass duct 30. As a result, it becomes possible to increase the temperature of the air bypassed toward the defrost vent 20. This makes it possible to increase the temperature of the air supplied to the upper region of the vehicle room in the heating mode, consequently increasing the vehicle room heating effect.

As stated above, the cold air guide baffle 40 serves to, depending on the operation mode of the air conditioning system, increase or decrease the amount of the cold air introduced into the bypass duct 30. Accordingly, the temperature of the warm air bypassed toward the defrost vent 20 can be actively controlled depending on the operation mode of the air conditioning system. Thus, the temperature of the warm air supplied to the upper region of the vehicle room can be optimally controlled depending on the operation mode of the air conditioning system. This assists in enhancing the pleasantness within the vehicle room.

With the present air conditioning system configured as above, a part of the cold air flowing through the cold air path 14 is also introduced into the bypass duct 30 while the warm air flowing through the warm air path 16 is bypassed toward the defrost vent 20 through the bypass duct 30. Therefore, unlike the conventional air conditioning system in which only the warm air flowing through the warm air path 16 is bypassed toward the defrost vent 20, it is possible to prevent a warm air of unduly high temperature from being bypassed toward the defrost vent 20. This makes it possible to prevent a warm air of unduly high temperature from being supplied to the upper region of the vehicle room. It is therefore possible to prevent a phenomenon that the temperature of the upper region of the vehicle room grows too high and a phenomenon that the vehicle room environment becomes unpleasant.

### [Second Embodiment]

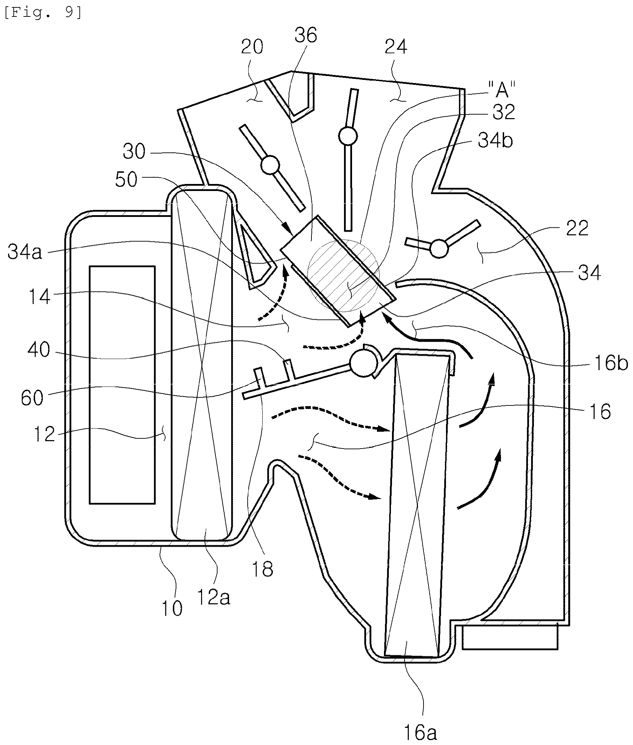

Fig. 9 shows an air conditioning system according to a second embodiment of the present invention. The air conditioning system of the second embodiment includes a cold air introducing cutout portion 50 formed in the outlet 36 of the bypass duct 30. The cold air introducing cutout portion 50 is formed by partially cutting away the outlet 36 of the bypass duct 30 and is arranged in an opposing relationship with the cold air path 14. In the present embodiment, the cold air introducing cutout portion 50 serves as a cold air introducing means.

A part of the cold air flowing through the cold air path 14 is introduced into the bypass duct 30 through the cold air introducing cutout portion 50. The cold air thus introduced is mixed with the bypassed warm air flowing through the bypass duct 30, thereby reducing the temperature of the bypassed warm air flowing through the bypass duct 30. As a result, it is possible to effectively reduce the temperature of the warm air flowing toward the defrost vent 20. This makes it possible to effectively reduce the temperature of the warm air supplied to the upper region of the vehicle room. Thus, the environment in the upper region of the vehicle room becomes pleasant.

Referring again to Fig. 9, the air conditioning system of the second embodiment further includes a second cold air guide baffle 60 arranged on the temperature control door 18. The second cold air guide baffle 60 is arranged on one surface of the temperature control door 18 in an opposing relationship with the cold air introducing cutout portion 50 of the bypass duct 30. In the present embodiment, the second cold air guide baffle 60 serves as a cold air introduction amount control means.

When the temperature control door 18 is swung, the second cold air guide baffle 60 is moved with respect to the cold air introducing cutout portion 50, thereby controlling the flow of the cold air introduced into the bypass duct 30 through the cold air introducing cutout portion 50.

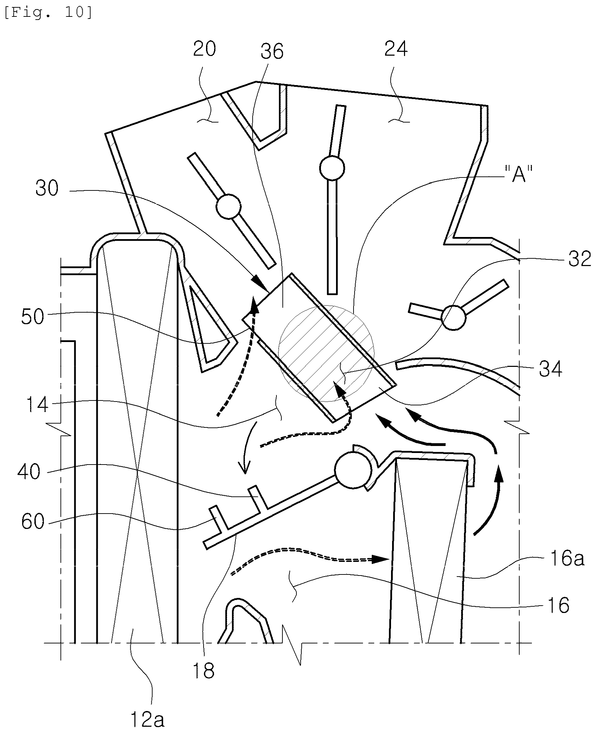

As shown in Fig. 10, if the temperature control door 18 is swung in such a direction as to open the cold air path 14 in a cooling mode, the second cold air guide baffle 60 allows the cold air to flow from the cold air path 14 toward the cold air introducing cutout portion 50 of the bypass duct 30, thereby increasing the amount of the cold air introduced into the cold air introducing cutout portion 50.

This enables an increased amount of cold air to be introduced into the bypass duct 30 through the cold air introducing cutout portion 50. As a result, it becomes possible to reduce the temperature of the air bypassed toward the defrost vent 20. This makes it possible to reduce the temperature of the air supplied to the upper region of the vehicle room in the cooling mode, consequently increasing the vehicle room cooling effect.

On the contrary, as shown in Fig. 1, if the temperature control door 18 is swung in such a direction as to open the warm air path 16 in a heating mode, the second cold air guide baffle 60 restrains the cold air from flowing from the cold air path 14 toward the cold air introducing cutout portion 50 of the bypass duct 30. This makes it possible to reduce the amount of the cold air introduced into the bypass duct 30 through the cold air introducing cutout portion 50.

Thus, only a small amount of cold air is introduced into the bypass duct 30 through the cold air introducing cutout portion 50. As a result, it becomes possible to increase the temperature of the air bypassed toward the defrost vent 20. This makes it possible to increase the temperature of the air supplied to the upper region of the vehicle room in the heating mode, consequently increasing the vehicle room heating effect.

With the air conditioning system of the second embodiment described above, the cold air flowing through the cold air path 14 is additionally introduced into the bypass duct 30 through the cold air introducing cutout portion 50. This makes it possible to more effectively reduce the temperature of the warm air bypassed toward the defrost vent 20. Accordingly, it is possible to more effectively control the temperature of the warm air supplied to the upper region of the vehicle room through the defrost vent 20, eventually enhancing the pleasantness within the vehicle room.

### {Third Embodiment}

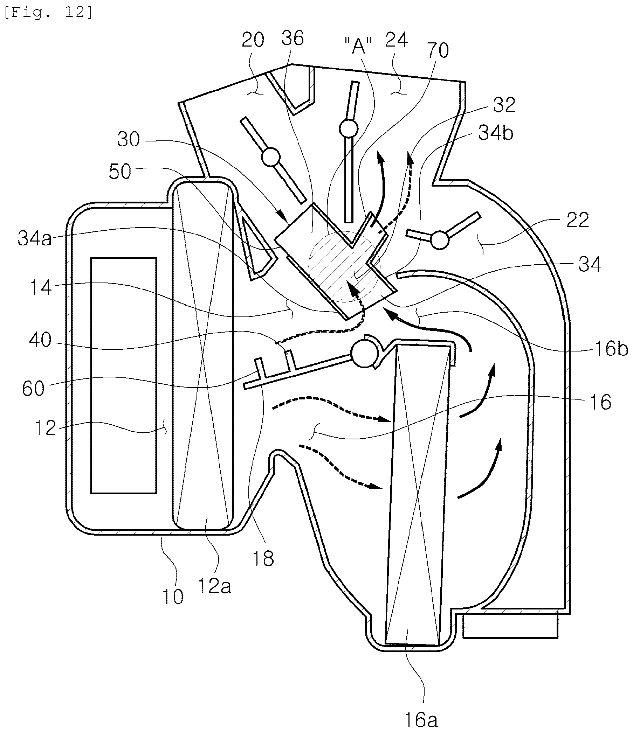

Fig. 12 shows an air conditioning system according to a third embodiment of the present invention. The air conditioning system of the third embodiment includes a branch duct 70 branched from the bypass duct 30. The branch duct 70 is branched from the bypass duct 30 to face toward a face vent 24.

The branch duct 70 serves to bypass the air flowing through the bypass duct 30 toward the face vent 24. Thus, a mixture of the warm air and the cold air is also supplied to an intermediate region of the vehicle room existing between the upper region and the lower region.

As a result, the intermediate region of the vehicle room is kept at a temperature similar to the temperature of the upper and lower regions of the vehicle room. This makes it possible to minimize the temperature deviation generated between the upper and lower regions and the intermediate region of the vehicle room, consequently enhancing the pleasantness within the vehicle room.

While certain preferred embodiments of the invention have been described hereinabove, the present invention is not limited to these embodiments. It is to be understood that various changes and modifications may be made without departing from the scope of the invention defined in the claims.

## Claims

1. An air conditioning system for motor vehicles comprising: an air conditioner case (10); a cold air path (14) defined within the air conditioner case (10) to allow a cold air passing through an evaporator (12a) to flow through the cold air path (14); a warm air path (16) defined within the air conditioner case (10) to allow a warm air passing through a heater core (16a) to flow through the warm air path (16); a temperature control door (18) arranged to swing between the cold air path (14) and the warm air path (16), the temperature control door (18) configured to control an opening degree of the cold air path (14) and an opening degree of the warm air path (16) to thereby adjust an amount of the cold air flowing through the cold air path (14) and an amount of the warm air flowing through the warm air path (16); and a defrost vent (20) arranged to discharge therethrough the cold air and the warm air toward an upper region of a vehicle room, wherein the air conditioning system is further comprising:
a bypass duct (30) arranged to bypass a part of the warm air flowing through the warm air path (16) toward the defrost vent (20), the bypass duct (30) including an inlet (34) aligned with the warm air path (16) and an outlet (36) aligned with the defrost vent (20);
a cold air introducing means arranged in at least one of the inlet (34) and the outlet (36) of the bypass duct (30) such that a part of the cold air flowing through the cold air path (14) is introduced into the bypass duct (30) through the cold air introducing means; **characterized by**
a cold air introduction amount control means arranged to control the amount of the cold air introduced from the cold air path (14) into the inlet (34) of the bypass duct (30); and
wherein the cold air introduction amount control means includes a cold air guide baffle (40) arranged on the temperature control door (18) in an opposing relationship with the inlet (34) of the bypass duct (30), the cold air guide baffle (40) configured to move together with the temperature control door (18) to thereby increase or decrease the amount of the cold air introduced from the cold air path (14) into the bypass duct (30); and
wherein the cold air introducing means includes a cold air introducing cutout portion (50) formed in the outlet (36) of the bypass duct (30) in an opposing relationship with the cold air path (14), the cold air introducing cutout portion (50) configured to introduce therethrough a part of the cold air from the cold air path (14) into the outlet (36) of the bypass duct (30).

2. The air conditioning system of claim 1, **characterized in that** the cold air introducing means includes an upstream end opening formed in the inlet (34) of the bypass duct (30) in a spaced-apart relationship with a downstream end portion of the warm air path (16) such that a part of the cold air is directly introduced from the cold air path (14) into the inlet (34) of the bypass duct (30) through the upstream end opening.

3. The air conditioning system of claim 2, **characterized in that** the upstream end opening is inclined at a specified angle so as to face toward the cold air path (14) such that the cold air flowing through the cold air path (14) is readily introduced into the inlet (34) of the bypass duct (30) through the upstream end opening.

4. The air conditioning system of claim 2, **characterized in that** an edge portion of the inlet (34) of the bypass duct (30) existing farther from the cold air path (14) is formed longer than an edge portion of the inlet (34) of the bypass duct (30) existing near the cold air path (14).

5. The air conditioning system of claim 1, **characterized in that** the cold air guide baffle (40) is configured such that, if the temperature control door (18) is swung in such a direction as to open the cold air path (14) in a cooling mode, the cold air guide baffle (40) allows the cold air to flow from the cold air path (14) toward the inlet (34) of the bypass duct (30), and such that, if the temperature control door (18) is swung in such a direction as to open the warm air path (16) in a heating mode, the cold air guide baffle (40) restrains the cold air from flowing from the cold air path (14) toward the inlet (34) of the bypass duct (30).

6. The air conditioning system of claim 1, **characterized by** further comprising:
a cold air introduction amount control means arranged to control the amount of the cold air introduced from the cold air path (14) into the outlet (36) of the bypass duct (30) through cold air introducing cutout portion (50); and
wherein the cold air introduction amount control means includes a cold air guide baffle (60) arranged on the temperature control door (18) in an opposing relationship with the outlet (36) of the bypass duct (30), the cold air guide baffle (60) configured to move together with the temperature control door (18) to thereby increase or decrease the amount of the cold air introduced from the cold air path (14) into the outlet (36) of the bypass duct (30).

7. The air conditioning system of claim 6, **characterized in that** the cold air guide baffle (60) is con-figured such that, if the temperature control door (18) is swung in such a direction as to open the cold air path (14) in a cooling mode, the cold air guide baffle (60) allows the cold air to flow from the cold air path (14) toward the outlet (36) of the bypass duct (30), and such that, if the temperature control door (18) is swung in such a direction as to open the warm air path (16) in a heating mode, the cold air guide baffle (60) restrains the cold air from flowing from the cold air path (14) toward the outlet (36) of the bypass duct (30).

8. The air conditioning system of claim 1, **characterized by** further comprising:
a branch duct (70) branched from the bypass duct (30) to extend toward a face vent (24), the branch duct (70) configured to bypass a mixture of the warm air and the cold air flowing through the bypass duct (30) toward the face vent (24).

9. The air conditioning system of claim 1, **characterized in that** the air conditioner case (10) includes a left flow path (10a) and a right flow path (10b) partitioned by a central separator (10c), the bypass duct (30) including a first bypass duct and a second bypass duct symmetrically arranged about the central separator (10c) in the left flow path (10a) and the right flow path (10b).

## Patentansprüche

1. Klimaanlagensystem für Motorfahrzeuge, umfassend: ein Klimaanlagen-Gehäuse (10); einen Kaltluft-Weg (14), der innerhalb des Klimaanlagen-Gehäuses (10) definiert ist, um zuzulassen, dass kalte Luft, die durch einen Verdampfer (12a) hindurchtritt, durch den Kaltluft-Weg (14) strömt; einen Warmluft-Weg (16), der innerhalb des Klimaanlagen-Gehäuses (10) definiert ist, um zuzulassen, dass warme Luft, die durch einen Heizkörper (16a) hindurchtritt, durch den Warmluft-Weg (16) strömt; eine Temperatur-Steuerklappe (18), die so angeordnet ist, dass sie zwischen dem Kaltluft-Weg (14) und dem Warmluft-Weg (16) hin- und herschwingt, wobei die Temperatur-Steuerklappe (18) so konfiguriert ist, dass sie den Öffnungsgrad des Kaltluft-Wegs (14) und den Öffnungsgrad des Warmluft-Wegs (16) steuert und dadurch die Menge an kalter Luft, die durch den Kaltluft- Weg (14) strömt, und die Menge an warmer Luft, die durch den Warmluft-Weg (16) strömt, einstellt; und eine Abtau-Öffnung (20), die dafür angeordnet ist, die kalte Luft und die warme Luft in Richtung auf einen oberen Bereich eines Fahrzeugraums abzulassen, wobei das Klimaanlagensystem weiter umfasst:
eine Bypass-Leitung (30), die so angeordnet ist, dass sie einen Teil der warmen Luft, die durch den Warmluft-Weg (16) strömt, zu der Abtau-Öffnung (20) umleitet, wobei die Bypass-Leitung (30) einschließt einen Einlass (34), der auf den Warmluft-Weg (16) ausgerichtet ist, und einen Auslass (36), der auf die Abtau-Öffnung (20) ausgerichtet ist;
eine Kaltluft-Zuführ-Einrichtung, die in wenigstens einem der Wege Einlass (34) und Auslass (36) der Bypass-Leitung (30) angeordnet ist, so dass ein Teil der kalten Luft, die durch den Kaltluft-Weg (14) strömt, durch die Kaltluft-Zuführ- Einrichtung in die Bypass-Leitung (30) eingeleitet wird;
**gekennzeichnet durch**
eine Kaltluft-Einleitmengen-Steuerungs-Einrichtung, die dafür eingerichtet ist, die Menge an kalter Luft zu steuern, die von dem Kaltluft-Weg (14) in den Einlass (34) der Bypass-Leitung (30) eingeleitet wird; und
wobei die Kaltluft-Einleitmengen-Steuerungs-Einrichtung ein Kaltluft-Leitblech (40) einschließt, das an der Temperatur-Steuerklappe (18) in einer entgegenwirkenden Beziehung mit dem Einlass (34) der Bypass-Leitung (30) angeordnet ist, wobei das Kaltluft-Leitblech (40) so konfiguriert ist, dass es sich zusammen mit der Temperatur-Steuerklappe (18) bewegt, um so die Menge an kalter Luft zu erhöhen oder zu erniedrigen, die von dem Kaltluft-Weg (14) in die Bypass-Leitung (30) eingeleitet wird; und
wobei die Kaltluft-Zuführ-Einrichtung einen kalte Luft zuführenden Ausschnitt-Teil (50) einschließt, der in dem Auslass (36) der Bypass-Leitung (30) in entgegenwirkender Beziehung zu dem Kaltluft-Weg (14) gebildet ist, wobei der kalte Luft zuführende Ausschnitt-Teil (50) so konfiguriert ist, dass er dadurch einen Teil der kalten Luft von dem Kaltluft-Weg (14) in den Auslass (36) der Bypass-Leitung (30) einleitet.

2. Klimaanlagen-System nach Patentanspruch 1, **dadurch gekennzeichnet, dass** die Kaltluft-Zuführ-Einrichtung eine in dem Einlass (34) der Bypass-Leitung (30) gebildete Öffnung an ihrem stromaufwärts gelegenen Ende in räumlich getrennt angeordneter Beziehung mit einem stromabwärts gelegenen Endteil des Warmluft-Weges (16) einschließt, so dass ein Teil der kalten Luft direkt von dem Kaltluft- Weg (14) in den Einlass (34) der Bypass-Leitung (30) durch die am stromaufwärts gelegenen Ende liegende Öffnung eingeleitet wird.

3. Klimaanlagen-System nach Patentanspruch 2, **dadurch gekennzeichnet, dass** die am stromaufwärts gelegenen Ende liegende Öffnung in einem speziellen Winkel geneigt ist, so dass sie in Richtung auf den Kaltluft-Weg (14) zeigt, so dass die kalte Luft, die durch den Kaltluft-Weg (14) strömt, einfach in den Einlass (34) der Bypass-Leitung (30) durch die am stromaufwärts gelegenen Ende liegende Öffnung eingeleitet wird.

4. Klimaanlagen-System nach Patentanspruch 2, **dadurch gekennzeichnet, dass** ein Kanten-Teil des Einlasses (34) der Bypass-Leitung (30), der weiter weg von dem Kaltluft-Weg (34) liegt, länger ausgebildet ist als ein Kanten-Teil des Einlasses (34) der Bypass-Leitung (30), der nahe dem Kaltluft-Weg (14) gelegen ist.

5. Klimaanlagen-System nach Patentanspruch 1, **dadurch gekennzeichnet, dass** das Kaltluft-Leitblech (40) derart konfiguriert ist, dass dann, wenn die Temperatur-Steuerklappe (18) in eine Richtung geschwungen ist, dass sie in einer Kühl-Betriebsweise den Kaltluft-Weg (14) öffnet, das Kaltluft-Leitblech (40) ermöglicht, dass die kalte Luft von dem Kaltluft-Weg (14) in Richtung auf den Einlass (34) der Bypass-Leitung (30) strömt, und dass dann, wenn die Temperatur-Steuerklappe (18) in eine Richtung geschwungen ist, dass sie in einer Heiz-Betriebsweise den Warmluft-Weg (16) öffnet, das Kaltluft-Leitblech (40) die kalte Luft daran hindert, in den Kaltluft-Weg (14) in Richtung auf den Einlass (34) der Bypass-Leitung (30) zu strömen.

6. Klimaanlagen-System nach Patentanspruch 1, **dadurch gekennzeichnet, dass** es weiter umfasst:
eine Kaltluft-Zuführmengen-Steuereinrichtung, die so angeordnet ist, dass sie die Menge an kalter Luft steuert, die von dem Kaltluft-Weg (14) in den Auslass (36) der Bypass-Leitung (30) durch den Kaltluft-Zuführ-Ausschnitt-Teil (50) eingeleitet wird; und wobei die Kaltluft-Zuführmengen-Steuereinrichtung ein Kaltluft-Leitblech (60) einschließt, das an der Temperatur-Steuerklappe (18) in entgegenwirkender Beziehung mit dem Auslass (36) der Bypass-Leitung (30) angebracht ist, wobei das Kaltluft-Leitblech (60) so konfiguriert ist, dass es sich zusammen mit der Temperatur-Steuerklappe (18) bewegt und so die Menge an kalter Luft erhöht oder erniedrigt, die von dem Kaltluft-Weg (14) in den Auslass (36) der Bypass- Leitung (30) eingeleitet wird.

7. Klimaanlagen-System nach Patentanspruch 6, **dadurch gekennzeichnet, dass** das Kaltluft-Leitblech (60) so konfiguriert ist, dass dann, wenn die Temperatur-Steuerklappe (18) in eine Richtung geschwungen ist, dass sie in einer Kühl-Betriebsweise den Kaltluft-Weg (14) öffnet, das Kaltluft-Leitblech (60) ermöglicht, dass die kalte Luft von dem Kaltluft-Weg (14) in Richtung auf den Auslass (36) der Bypass-Leitung (30) strömt, und dass dann, wenn die Temperatur- Steuerklappe (18) in eine Richtung geschwungen ist, dass sie in einer Heiz- Betriebsweise den Warmluft-Weg (16) öffnet, das Kaltluft-Leitblech (60) die kalte Luft daran hindert, in den Kaltluft-Weg (14) in Richtung auf den Auslass (36) der Bypass-Leitung (30) zu strömen.

8. Klimaanlagen-System nach Patentanspruch 1, **dadurch gekennzeichnet, dass** es weiter umfasst:
eine Zweigleitung (70), die von der Bypass-Leitung (30) abzweigt und sich in Richtung auf eine Gesichts-Öffnung (24) erstreckt, wobei die Zweigleitung (70) so konfiguriert ist, dass sie eine Mischung aus der warmen Luft und der kalten Luft, die durch die Bypass-Leitung (30) strömt, in Richtung auf die Gesichts-Öffnung (24) umleitet.

9. Klimaanlagen-System nach Patentanspruch 1, **dadurch gekennzeichnet, dass** das Klimaanlagen-Gehäuse (10) einen linken Strömungsweg (10a) und einen rechten Strömungsweg (10b) einschließt, die durch eine zentrale Trenneinrichtung (10c) voneinander abgetrennt sind, wobei die Bypass-Leitung (30) eine erste Bypass-Leitung und eine zweite Bypass-Leitung einschließt, die symmetrisch um die zentrale Trenneinrichtung (10c) in dem linken Strömungsweg (10a) und dem rechten Strömungsweg (10b) angeordnet sind.

## Revendications

1. Système de climatisation pour véhicules à moteur comprenant: un carter de climatiseur (10); une voie de passage d'air froid (14) définie à l'intérieur du carter de climatiseur (10) pour permettre à un air froid traversant un évaporateur (12a) de s'écouler à travers la voie de passage d'air froid (14); une voie de passage d'air chaud (16) définie à l'intérieur du carter de climatiseur (10) pour permettre à un air chaud traversant un radiateur de chauffage (16a) de s'écouler à travers la voie de passage d'air chaud (16); une porte de commande de température (18) agencée pour osciller entre la voie de passage d'air froid (14) et la voie de passage d'air chaud (16), la porte de commande de température (18) étant configurée pour commander un degré d'ouverture de la voie de passage d'air froid (14) et un degré d'ouverture de la voie de passage d'air chaud (16) pour ainsi ajuster une quantité d'air froid s'écoulant à travers la voie de passage d'air froid (14) et une quantité d'air chaud s'écoulant à travers la voie de passage d'air chaud (16); et une bouche de dégivrage (20) agencée pour décharger à travers celle-ci l'air froid et l'air chaud vers une région supérieure d'un habitacle de véhicule, le système de climatisation comprenant en outre:
un conduit de dérivation (30) agencé pour dériver une partie de l'air chaud s'écoulant à travers la voie de passage d'air chaud (16) vers la bouche de dégivrage (20), le conduit de dérivation (30) comportant une entrée (34) alignée avec la voie de passage d'air chaud (16) et une sortie (36) alignée avec la bouche de dégivrage (20);
un moyen d'introduction d'air froid agencé dans au moins un emplacement parmi l'entrée (34) et la sortie (36) du conduit de dérivation (30) de telle sorte qu'une partie de l'air froid s'écoulant à travers la voie de passage d'air froid (14) est introduite dans le conduit de dérivation (30) à travers le moyen d'introduction d'air froid;
**caractérisé par**
un moyen de commande de quantité d'introduction d'air froid agencé pour commander la quantité d'air froid introduit depuis la voie de passage d'air froid (14) jusque dans l'entrée (34) du conduit de dérivation (30); et dans lequel le moyen de commande de quantité d'introduction d'air froid comporte une baffle de guidage d'air froid (40) agencée sur la porte de commande de température (18) dans une relation d'opposition avec l'entrée (34) du conduit de dérivation (30), la baffle de guidage d'air froid (40) étant configurée pour se déplacer conjointement avec la porte de commande de température (18) pour ainsi augmenter ou diminuer la quantité d'air froid introduit depuis la voie de passage d'air froid (14) jusque dans le conduit de dérivation (30) ; et dans lequel le moyen d'introduction d'air froid comporte une portion découpée d'introduction d'air froid (50) formée dans la sortie (36) du conduit de dérivation (30) dans une relation d'opposition avec la voie de passage d'air froid (14), la portion découpée d'introduction d'air froid (50) étant configurée pour introduire à travers celle-ci une partie de l'air froid depuis la voie de passage d'air froid (14) jusque dans la sortie (36) du conduit de dérivation (30).

2. Système de climatisation selon la revendication 1, **caractérisé en ce que** le moyen d'introduction d'air froid comporte une ouverture d'extrémité amont formée dans l'entrée (34) du conduit de dérivation (30) dans une relation espacée par rapport à une partie d'extrémité aval de la voie de passage d'air chaud (16) de telle sorte qu'une partie de l'air froid est directement introduite depuis la voie de passage d'air froid (14) jusque dans l'entrée (34) du conduit de dérivation (30) à travers l'ouverture d'extrémité amont.

3. Système de climatisation selon la revendication 2, **caractérisé en ce que** l'ouverture d'extrémité amont est inclinée à un angle spécifié de manière à être en regard de la voie de passage d'air froid (14) de telle sorte que l'air froid s'écoulant à travers la voie de passage d'air froid (14) est aussitôt introduit dans l'entrée (34) du conduit de dérivation (30) à travers l'ouverture d'extrémité amont.

4. Système de climatisation selon la revendication 2, **caractérisé en ce qu'**une portion en bordure de l'entrée (34) du conduit de dérivation (30) se trouvant plus loin de la voie de passage d'air froid (14) est formée plus longue qu'une portion en bordure de l'entrée (34) du conduit de dérivation (30) se trouvant plus près de la voie de passage d'air froid (14).

5. Système de climatisation selon la revendication 1, **caractérisé en ce que** la baffle de guidage d'air froid (40) est configurée de telle sorte que, si la porte de commande de température (18) est oscillée dans une direction de telle sorte qu'elle ouvre la voie de passage d'air froid (14) dans un mode de refroidissement, la baffle de guidage d'air froid (40) permet à l'air froid de s'écouler depuis la voie de passage d'air froid (14) vers l'entrée (34) du conduit de dérivation (30), et de telle sorte que, si la porte de commande de température (18) est oscillée dans une direction de telle sorte qu'elle ouvre la voie de passage d'air chaud (16) dans un mode de chauffage, la baffle de guidage d'air froid (40) retient l'air froid de s'écouler depuis la voie de passage d'air froid (14) vers l'entrée (34) du conduit de dérivation (30).

6. Système de climatisation selon la revendication 1, **caractérisé en ce qu'**il comprend en outre:
un moyen de commande de quantité d'introduction d'air froid agencé pour commander la quantité d'air froid introduit depuis la voie de passage d'air froid (14) jusque dans la sortie (36) du conduit de dérivation (30) à travers la portion découpée d'introduction d'air froid (50) ; et dans lequel le moyen de commande de quantité d'introduction d'air froid comporte une baffle de guidage d'air froid (60) agencée sur la porte de commande de température (18) dans une relation d'opposition avec la sortie (36) du conduit de dérivation (30), la baffle de guidage d'air froid (60) étant configurée pour se déplacer conjointement avec la porte de commande de température (18) pour ainsi augmenter ou diminuer la quantité d"air froid introduit depuis la voie de passage d'air froid (14) jusque dans la sortie (36) du conduit de dérivation (30).

7. Système de climatisation selon la revendication 6, **caractérisé en ce que** la baffle de guidage d'air froid (60) est configurée de telle sorte que, si la porte de commande de température (18) est oscillée dans une direction de telle sorte qu'elle ouvre la voie de passage d'air froid (14) dans un mode de refroidissement, la baffle de guidage d'air froid (60) permet à l'air froid de s'écouler de la voie de passage d'air froid (14) vers la sortie (36) du conduit de dérivation (30), et de telle sorte que, si la porte de commande de température (18) est oscillée dans une direction de telle sorte qu'elle ouvre la voie de passage d'air chaud (16) dans un mode de chauffage, la baffle de guidage d'air froid (60) retient l'air froid de s'écouler de la voie de passage d'air froid (14) vers la sortie (36) du conduit de dérivation (30).

8. Système de climatisation selon la revendication 1, **caractérisé en ce qu'**il comprend en outre:
un conduit secondaire (70) bifurquant depuis le conduit de dérivation (30) pour s'étendre vers un évent de face (24), le conduit secondaire (70) étant configuré pour dériver un mélange d'air chaud et d'air froid s'écoulant à travers le conduit de dérivation (30) vers l'évent de face (24).

9. Système de climatisation selon la revendication 1, **caractérisé en ce que** le carter de climatiseur (10) comporte une voie de passage d'écoulement à gauche (10a) et une voie de passage d'écoulement à droite (10b) séparées par un séparateur central (10c), le conduit de dérivation (30) comportant un premier conduit de dérivation et un second conduit de dérivation agencés symétriquement autour du séparateur central (10c) dans la voie de passage d'écoulement à gauche (10a) et la voie de passage d'écoulement à droite (10b).
